# EUROPEAN PATENT SPECIFICATION

(11) **EP 3 515 791 B1**
(45) Date of publication and mention of the grant of the patent: **15.12.2021**
(21) Application number: 17786997.1
(22) Date of filing: 19.09.2017
(51) Int. Cl.: B62D 1/185, B62D 33/06, B60N 2/14, B60N 3/00

(54) **RECONFIGURABLE CABIN FOR INDUSTRIAL VEHICLE**
REKONFIGURIERBARE KABINE FÜR EIN NUTZFAHRZEUG
CABINE RECONFIGURABLE POUR VÉHICULE INDUSTRIEL

(30) Priority: 19.09.2016 IT 201600093794
(43) Date of publication of application: 31.07.2019
(73) Proprietor: Iveco S.p.A., 10156 Torino (IT)
(72) Inventor: ARMIGLIATO, Marco, 10153 Torino (IT); VERGANO, Raffaele, 10020 Cambiano (IT); FINOTELLO, Roberto, 10040 Lombardore (IT); VARRASSO, Maddalena, 10139 Torino (IT)
(74) Representative: Faraldi, Marco
(86) International application number: PCT/IB2017/055671
(87) International publication number: WO 2018/051317

(56) References cited:
- EP-A1- 0 054 948
- EP-A2- 0 841 236
- DE-A1- 1 580 705
- DE-A1- 19 916 091
- DE-A1-102014 013 955
- DE-B3-102008 028 266
- DE-U1-202007 011 645
- FR-A1- 2 694 259
- FR-A1- 2 840 871
- US-A- 3 695 627

## Description

### TECHNICAL FIELD

The invention relates to a reconfigurable cabin, in particular to a reconfigurable cabin for industrial vehicles.

### BACKGROUND ART

Industrial vehicle cabins, in particular those installed in trailer trucks, are used by drivers both to drive the vehicle and as a resting space or to eat meals when they stop.

Hence, industrial vehicle cabins always tend to be more comfortable and are provided with different devices that are configured to fulfil the different needs of the drivers during middle-distance or long-distance travels.

Examples of arrangement for industrial vehicle cabins are disclosed in documents DE1580705 A1, EP0054948 A1, DE19916091 A1 or DE102008028266 B3.

In addition, FR2694259A1 discloses the features of the preamble of claim 1; US3695627 A discloses an adjustable steering column for an agricultural machine; DE202007011645 U1 and DE102014013955 A1 disclose a seating assembly and EP0841236 A2 discloses a steering assembly.

Anyway, there is a strong need to improve current industrial vehicle cabins so as to ensure living conditions that are adequate for current market standards.

### DISCLOSURE OF INVENTION

In order to do so, the invention provides a reconfigurable cabin example, with reference to the accompanying drawings, wherein:
- figure 1 is a perspective view of a reconfigurable cabin according to the invention;
- figure 2 is a perspective view of a first element housed inside the cabin of figure 1;
- figure 3 is a perspective view of a second element housed inside the cabin of figure 1;
- figure 4 is a perspective view of a third element housed inside the cabin of figure 1; and
- figures 5A - 5F are schematic views showing different configurations of the elements of figures 2-4 inside the cabin of figure 1.

### - BEST MODE FOR CARRYING OUT THE INVENTION

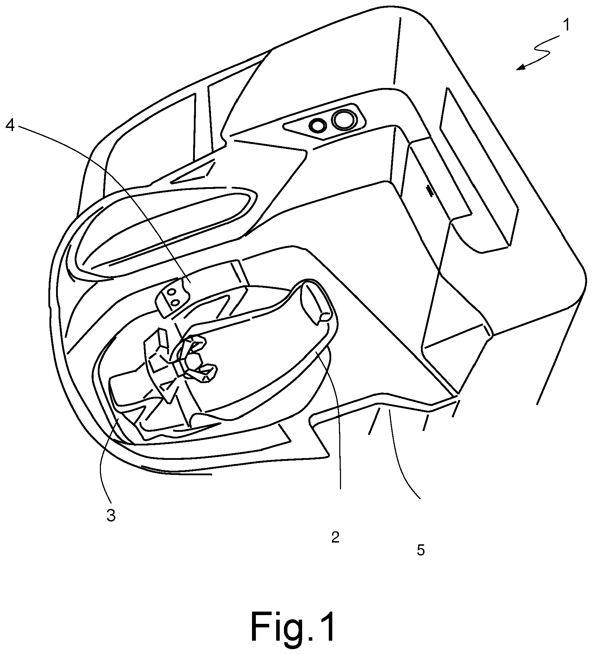

Figure 1 shows a cabin 1 of an industrial vehicle where a plurality of walls define an inner volume that approximately has the shape of a parallelepiped and can be accessed from a pair of lateral doors.

The cabin is provided - in a known manner - with vertical lateral walls, with a horizontal base wall and with a substantially horizontal upper wall.

The cabin 1 is provided with a seat 2 and with a steering assembly 3 arranged at the front with respect to the seat 2, and both arranged on the side with respect to a lateral door 5 that allows access to the cabin 1.

The cabin 1 further comprises a console 4, which is arranged on a side of the seat 2, opposite the door 5. Furthermore, the cabin 1 is provided with a plurality of other elements, such as, for example, a bed, a couch or a washbasin.

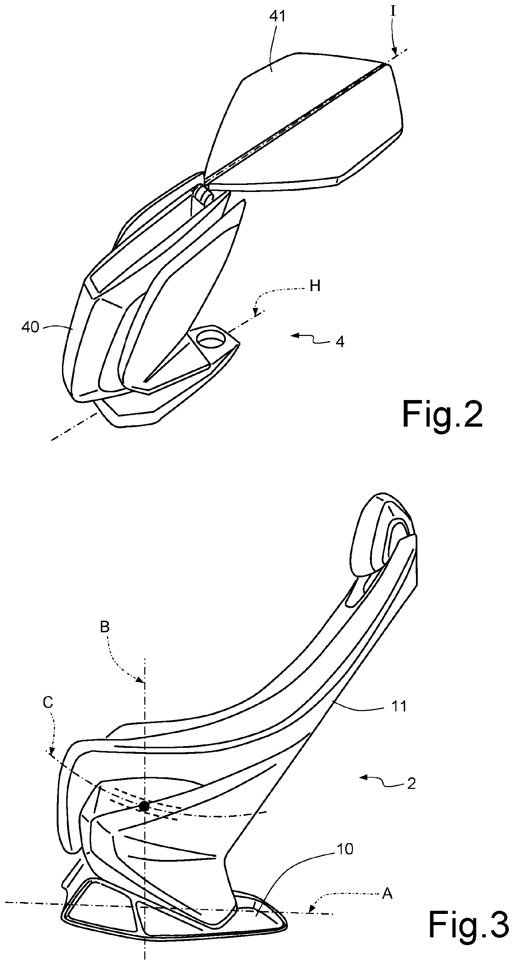

As you can see in figure 3, the seat 2 basically comprises a support base 10, which is supported in a mobile manner by the base wall (floor) of the cabin 1, and a seat/backrest assembly 11, which is supported in a mobile manner with respect to said base.

The base 10 is configured to slide on the floor of said cabin, in a direction that is parallel to an axis A parallel to the longer sides of the vehicle. The sliding of the base 10 on the floor of the cabin can be obtained in a known manner, for example with guides having straight tracks or with proper prismatic couplings (not shown) made in the base of the cabin. The base 10 can slide between a rear stroke end position, in which the seat 2 is as far as possible from the steering assembly 3, and a front stroke end position, in which the seat 2 is as close as possible to the steering assembly 3.

The base 10 is further provided with an articulation (not shown), which allows the base to rotate around a vertical axis B with respect to the floor of the cabin 1, substantially by 360°.

The seat/backrest assembly 11 is supported in an angularly mobile manner with respect to the base 10, so that said assembly 11 can slide along a curved path C with respect to the base 10, preferably by means of a prismatic coupling or by means of tracks. The seat/backrest assembly 11 can slide between a lower stroke end, in which the the assembly 11 is inclined with respect to the floor of the cabin 1, and an upper stroke end, in which the seat 11 is substantially vertical with respect to the floor of said cabin 1.

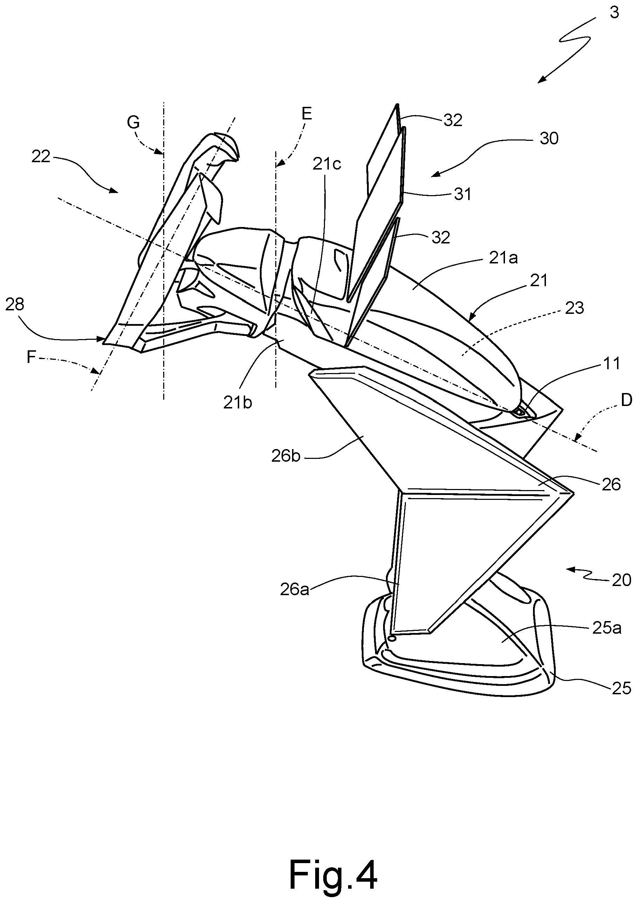

Figure 4 shows the steering assembly 3, which basically comprises a column 20, an intermediate body 21 supported by the column 20 and a hub 22 supported by the body 21, wherein the hub 22 faces the seat/backrest assembly so as to face the driver.

The column 20 comprises a base 25, which is fixed to the floor of the cabin of the vehicle, and a pair of lateral uprights 26 axially extending from the base 25. Preferably, the uprights 26 are fixed to respective projections 25a axially extending from the base 25 in the area of the uprights 26. Hence, the driver can place his/her legs in the space between the uprights 26.

More preferably, the uprights 26 have a substantially prismatic shape with a rhomboidal cross-section and comprise a lower trapezoidal portion 26a, which is inclined with respect to a horizontal plane so as to move away from the driver, and an integral upper trapezoidal portion 7b, which is substantially inclined at the same angle as the lower portion with respect to a horizontal plane, but so as to move closer to the driver. The two upper and lower portions 26b, 26a substantially have the same dimensions and, hence, define a stylized V-shape or boomerang-shape with the concavity facing the driver.

On lateral inner surfaces of the upper portions 26b there is respectively provided a guide 23 with a substantially rectangular shape, which runs along the upper portions 26b from an upper limit position to a lower limit position. The guides 23 are configured to cooperate with a slide, which extends from the body 21, as described below.

The body 21 has a tapering shape delimited by a pair of respectively concave and convex upper 21a and lower 21b surfaces and by a pair of lateral surfaces 21c having a concavity that faces the inside of the body 21.

On each one of the lateral surfaces 21c there is provided, coaxial, at least one slide (not shown), which is configured to cooperate with the guides 23 described above so as to allow the body 21 to slide relative to the uprights 26.

Therefore, the body 21 can freely slide between an upper stroke end position, in which the slide strikes against the upper limit position of the guides 23, and a lower stroke end position, in which the slide strikes against the lower limit position of the guides 23.

The sliding coupling between the slide and the guides 23 is configured to allow the body 21 to be positioned with respect to the uprights 26 in three predetermined stable positions:
- A first position, in which the body 21 is arranged at the upper stroke end;
- A second position, in which the body 21 is arranged at the lower stroke end; and
- A third position, in which the body 21 is arranged in an intermediate position of the guides 23, corresponding to half the useful stroke of the body 21 between the uprights 26.

On the upper surface 21a there is fixed a control panel 30 comprising a main screen 31, preferably with a substantially rectangular flat shape, and a pair of auxiliary screens 32, which are supported by said main screen in a mobile manner and, in use, are available on opposite sides of the central screen.

In particular, the auxiliary screen 32 can slide behind the main screen 31 so as to be housed there when there is no need to use the entire width of the control panel 30. For example, the auxiliary screens slide thanks to a prismatic coupling to the main screen 31.

The projecting terminal portion of the body 21 supports the hub 22. The hub 22 substantially has the shape of a truncated cone and comprises a gripping device 28, which is connected to the hub 22 and faces the driver using the steering assembly 3.

The hub 22 is supported by the body 21 so that it can freely rotate around a longitudinal axis D of the body 21 in order to operate, through rotation, an actuator (for example, an encoder) and generate a signal that can be used to control the steering in a known manner according to the by-wire technology.

The hub 22 can also rotate, within a predetermined limit, around a transverse axis E, which is perpendicular to the longitudinal axis D of the body 21, between a lower position, in which the longitudinal axis of the hub 22 is substantially horizontal, and a position, in which the longitudinal axis of the hub 22 is substantially coaxial to the axis D of the body 21.

The gripping device 28 is connected to the hub 3 so that it can rotate around a horizontal axis F, which is horizontal with respect to the hub 22, and around a vertical axis G so as to move from a lower open position, facing the driver, to an upper closed position, in which it faces the control panel 30. Through the gripping device 28 the driver can rotate the hub 22 around its longitudinal axis, so as to permit the steering.

Preferably, the gripping device 28 comprises a pair of substantially "C"-shaped handlebars, whose lower end is fixed to the hub 22 and whose free end faces the control panel 30.

The console 4 (figure 2) is supported in a mobile manner on the floor of the cabin 1, is arranged on the side of the seat 2 and basically comprises a base 40 and a folding table 41, which can be housed inside a central seat of the base 40.

Preferably, the base 40 is supported in a sliding manner on the floor of the cabin 1 and is free to move along an axis H, which is parallel to the axis A, between a rear stroke end and a front stroke end.

The table 41 comprises two flat support surfaces, which have a trapezoidal shape and can move with respect to one another around a longitudinal axis I between a closing position (not shown), in which the portions face and are parallel to one another and can be housed in the aforesaid seat, and a use position (shown in figure 2), in which the trapezoidal portions are arranged on the outside of the seat and are coplanar to one another.

The two flat portions are hinged with respect to the base 40 by means of hinge joint 42, which is obtained in a known manner and is designed to enable the insertion/removal movement into/from the seat of the base 40.

The movements of the seat 2, of the steering assembly 3 and of the console 4 can be carried out manually or, in a known manner, through electric actuators.

The seat 2 and the steering assembly 3 can change their position and the space they occupy inside the cabin 1 in order to reach one among different predefined configurations conceived to optimize ergonomics during some operations of the driver staying the cabin 1.

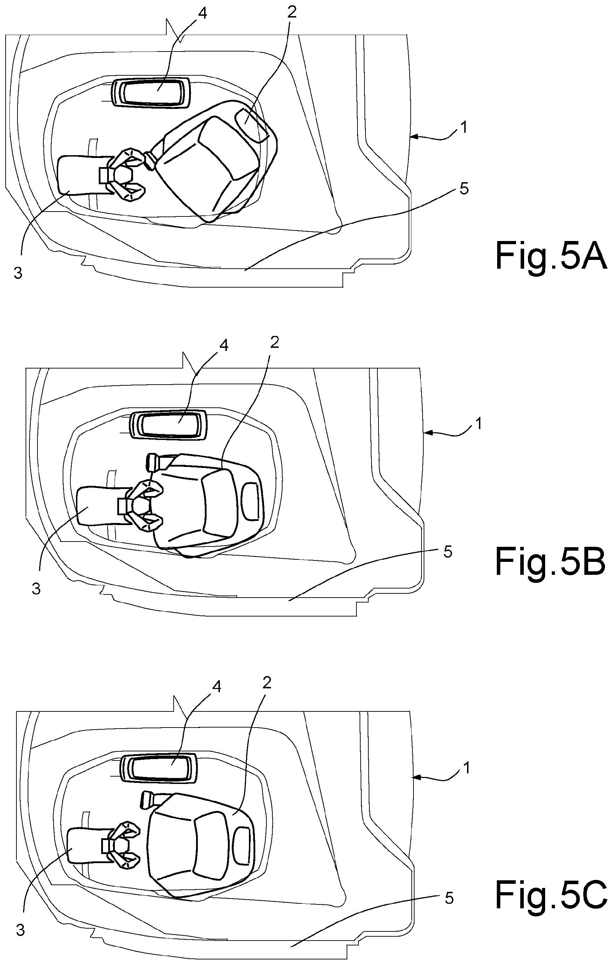

In a first predefined configuration, adapted to allow the driver to correctly enter the cabin 1, shown in figure 5A:
- the steering assembly 3 is positioned so that the body 21 is positioned in its upper stroke end, the hub 22 is not rotated with respect to the transverse axis E and the gripping device 28 is positioned in its lower stroke end; and
- the seat 2 is positioned so that the seating assembly/seat 11 is positioned at its lower stroke end, the base 10 is positioned at its rear stroke end, the seat 2 is rotated by 45 degrees, with respect to the sliding axis A of the base 10, facing towards the door 5 of the cabin.

In a second predefined configuration, adapted for town driving, which - in particular - is raised and allows the driver to see immediately in front of the vehicle, shown in figure 5b:
- the steering assembly 3 is positioned so that the body 21 is positioned in its upper stroke end, the hub 22 is not rotated with respect to the transverse axis E and the gripping device 28 is positioned in its lower stroke end; and
- the seat 2 is positioned so that the seating assembly/seat 11 is positioned at its lower stroke end, the base 10 is positioned at its front stroke end, and the seat 2 is not rotated with respect to the sliding axis A of the base 10.

In a third predefined configuration, adapted to motorway driving, which - in particular - is more inclined and allows the driver to better see from a distance, shown in figure 5C:
- the steering assembly 3 is positioned so that the body 21 is positioned in its intermediate position, the hub 22 is rotated with respect to the transverse axis E and the gripping device 28 is positioned in its lower stroke end; and
- the seat 2 is positioned so that the seating assembly/seat 11 is positioned at its upper stroke end, the base 10 is positioned at its front stroke end, and the seat 2 is not rotated with respect to the sliding axis A of the base 10.

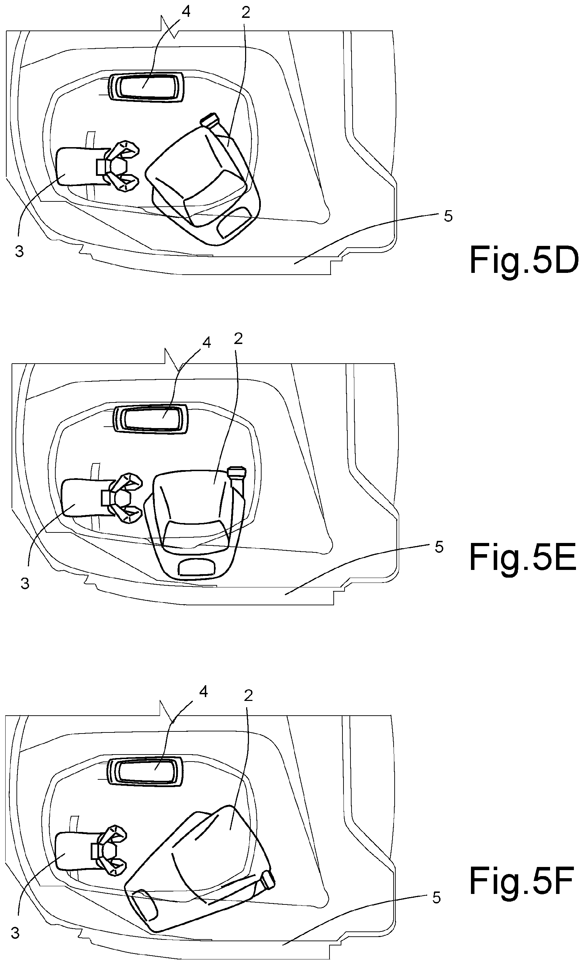

In a fourth predefined configuration, adapted for automatic driving, namely when the vehicle drives autonomously and the driver can do something else, shown in figure 5D:
- the steering assembly 3 is positioned so that the body 21 is positioned in its lower stroke end, the hub 22 is not rotated with respect to the transverse axis E and the gripping device 28 is positioned in its upper stroke end; and
- the seat 2 is positioned so that the seating assembly/seat 11 is positioned at its upper stroke end, the base 10 is positioned at its front stroke end, the seat 2 is rotated by 45°, with respect to the sliding axis A of the base 10, facing the opposite side with respect to the door 5 of the cabin.

In a fifth predefined configuration, adapted for the driver to rest together with other guests, shown in figure 5E:
- the steering assembly 3 is positioned so that the body 21 is positioned in its lower stroke end, the hub 22 is not rotated with respect to the transverse axis E and the gripping device 28 is positioned in its upper stroke end; and
- the seat 2 is positioned so that the seating assembly/seat 11 is positioned at its lower stroke end, the base 10 is positioned at its rear stroke end, the seat 2 is rotated by 90°, with respect to the sliding axis A of the base 10, facing the opposite side with respect to the door 5 of the cabin.

In a sixth predefined configuration, adapted for the driver to rest alone, shown in figure 5F:
- the steering assembly 3 is positioned so that the body 21 is positioned in its lower stroke end, the hub 22 is not rotated with respect to the transverse axis E and the gripping device 28 is positioned in its upper stroke end; and
- the seat 2 is positioned so that the seat 11 is positioned at its upper stroke end, the base 10 is positioned at its rear stroke end, the seat 2 is rotated by 135°, with respect to the sliding axis A of the base 10, facing the opposite side with respect to the door 5 of the cabin.

The reconfigurable cabin 1 works as follows.

Based on the use, the driver can - either manually or through known electric control means - start the reconfiguration of the seat 2 and of the steering assembly 3 so as to make the cabin 1 more comfortable for his/her activity.

The passages between the six possible configurations described above are omitted for the sake of brevity, as they are obvious for a person skilled in the art.

Owing to the above, the advantages of a reconfigurable cabin according to the invention are evident.

The cabin 1 allows drivers to configure the positions of the seat 2 and of the steering assembly 3 so as to improve the use and the liveability of the cabin 1.

The reconfigurations of the seat 2 and of the steering assembly 3 are carried out in a simple and economic fashion and can be automated.

Finally, the reconfigurable cabin 1 described above can be subjected to changes, which - however - do not go beyond the scope of protection set forth in the appended claims.

For example, the seat 2 and the steering assembly 3 could comprise other configurations that are not explicitly described herein.

## Claims

1. A cabin (1) of an industrial vehicle, said cabin (1) being provided with a steering assembly (3) and a seating assembly (2),
said seating assembly (2) comprising a base (10) and a seat (11) supported in a mobile manner with respect to said base (10),
said steering assembly (3) comprising a column (20) fixed to said floor, an intermediate body (21) supported in a mobile manner with respect to said column (20) and a hub (22) supported rotationally free with respect to said intermediate body (21),
said steering assembly (3) and said seating assembly (2) being configured to modify the position which each of them occupies, inside said cabin (1) and their relative positions, in order to be arranged in a position selected from a plurality of predefined configurations of the inside of said cabin (1),
said base (10) being supported in a mobile manner with respect to the floor of said cabin (1) via guide means configured to allow the movement of said base along an axis (A) parallel to the longer sides of said vehicle, between a front stroke end and a rear stroke end
said cabin (1) further comprising articulation means configured to allow the rotation of said base (10) around a vertical axis (B), with respect to said floor;
**characterized in that** the cabin is defined by a floor, a roof and a plurality of lateral walls, and that the seating assembly/seat (11) is mobile with respect to said base along a curved path (C) between an upper stroke end and a lower stroke end, and **in that** said intermediate body (21) of said steering assembly (3) slides relative to said column (20).

2. A cabin (1) according to claim 1, wherein said sliding occurs along a rectilinear path along an axis (D) between an upper stroke end and a lower stroke end, said intermediate body (21) being available in a plurality of stable positions between said upper and lower stroke end.

3. A cabin (1) according to any one of the preceding claims, wherein said hub (22) is supported rotationally free around a longitudinal axis of said intermediate body (21).

4. A cabin (1) according to any one of the preceding claims, wherein said hub (22) can incline, within a given angular range, with respect to an axis (E) perpendicular to the axis of said intermediate body (21).

5. A cabin (1) according to any one of the preceding claims, wherein said hub (22) comprises gripping means, said gripping means being able to rotate around respective a horizontal (G) and a vertical (F) axes with respect to a longitudinal axis of said hub (22) to position themselves respectively in a compact position on said hub (22) and an opened position with respect to said hub (22).

6. A cabin (1) according to one of the preceding claims, further comprising a console (4), said console (4) comprising a base (40) mobile with respect to said floor and a folding table (41) which can be extracted from said base (40).

7. A cabin (1) according to one of the preceding claims, wherein the movements of said base (10), of said seating assembly/seat (11) and of said intermediate body (21) housed in said cabin (1) can be accomplished manually or by means of electric actuators.

8. A cabin (1) according to one of the preceding claims, wherein one of said predefined configurations is a configuration adapted to the driver when entering into the vehicle, wherein:
- said steering assembly (3) is positioned so that said intermediate body (21) is positioned in said upper stroke end, said hub (22) is not rotated with respect to said horizontal axis and said gripping means are positioned in said lower stroke end,
- said seat (2) is positioned so that said seating assembly/seat (11) is positioned at said lower stroke end, said base (10) is positioned at said rear stroke end, and said seat (2) is rotated by 45 degrees, with respect to the sliding axis (A) of said base (10), facing towards a door of said cabin (1) of the vehicle.

9. A cabin (1) according to one of the preceding claims wherein one of said predefined configurations is a configuration adapted for town driving, wherein:
- said steering assembly (3) is positioned so that said intermediate body (21) is positioned in said upper stroke end, said hub (22) is not rotated with respect to said horizontal axis and said gripping means are positioned in said lower stroke end,
- said seat (2) is positioned so that said seating assembly/seat (11) is positioned at said lower stroke end, said base (10) is positioned at said front stroke end, and said seat (2) is not rotated with respect to the sliding axis (A) of said base (10).

10. A cabin (1) according to one of the preceding claims, wherein one of said predefined configurations is a configuration adapted to motorway driving, wherein:
- said steering assembly (3) is positioned so that said intermediate body (21) is positioned in an intermediate position, said hub (22) is rotated with respect to said horizontal axis and said gripping means are positioned in said lower stroke end,
- said seat (2) is positioned so that said seating assembly/seat (11) is positioned at said upper stroke end, said base (10) is positioned at said front stroke end, and said seat (2) is not rotated with respect to the sliding axis (A) of said base (10).

11. A cabin (1) according to one of the preceding claims, wherein one of said predefined configurations is a configuration adapted to automatic driving, wherein:
- said steering assembly (3) is positioned so that said intermediate body (21) is positioned in said lower stroke end, said hub (22) is not rotated with respect to said horizontal axis and said gripping means are positioned in said upper stroke end;
- said seat (2) is positioned so that said seating assembly/seat (11) is positioned at said upper stroke end, said base (10) is positioned at said front stroke end, and said seat (2) is rotated by 45° with respect to the sliding axis (A) of said base (10), facing the opposite side with respect to an exit of said cabin (1).

12. A cabin (1) according to one of the preceding claims, wherein one of said predefined configurations is a configuration adapted to the driver when at rest, possibly with passengers, wherein:
- said steering assembly (3) is positioned so that said intermediate body (21) is positioned in said lower stroke end, said hub (22) is not rotated with respect to said horizontal axis and said gripping means are positioned in said upper stroke end,
- said seat (2) is positioned so that said seating assembly/seat (11) is positioned at said lower stroke end, said base (10) is positioned at said rear stroke end, and said seat (2) is rotated by 90° with respect to the sliding axis (A) of said base (10), facing the opposite side with respect to a door (5) of said cabin (1).

13. A cabin (1) according to one of the preceding claims, wherein one of said predefined configurations is a configuration adapted to the driver when at rest, wherein:
- said steering assembly (3) is positioned so that said intermediate body (21) is positioned in said lower stroke end, said hub (22) is not rotated with respect to said horizontal axis and said gripping means are positioned in said upper stroke end,
- said seat (2) is positioned so that said seating assembly/seat (11) is positioned at said upper stroke end, said base (10) is positioned at said rear stroke end, and said seat (2) is rotated by 135° clockwise with respect to the sliding axis (A) of said base (10), facing the opposite side with respect to a door (5) of said cabin (1).

## Patentansprüche

1. Kabine (1) eines Nutzfahrzeugs, welche Kabine (1) mit einer Steueranordnung (3) und einer Sitzanordnung (2) versehen ist,
welche Sitzanordnung (2) eine Basis (10) und einen Sitz (11) umfasst, der beweglich bezüglich der Basis (10) gelagert ist,
wobei die Steueranordnung (3) eine Säule (20) umfasst, die an dem Boden befestigt ist, einen Zwischenkörper (21), der beweglich bezüglich der Säule (20) gelagert ist, und eine Nabe (22), die frei drehbar bezüglich des Zwischenkörpers (21) gelagert ist,
wobei die Steueranordnung (3) und die Sitzanordnung (2) derart ausgebildet sind, dass die Position verändert werden kann, welche jede von ihnen innerhalb der Kabine (1) einnimmt, sowie die relativen Positionen zueinander, derart, dass sie in einer Position angeordnet werden können, die aus einer Mehrzahl vorbestimmter Konfigurationen innerhalb der Kabine (1) ausgewählt wird,
wobei die Basis (10) beweglich bezüglich des Bodens der Kabine (1) durch Führungsmittel gelagert ist, die derart ausgebildet sind, dass sie die Bewegung der Basis entlang einer Achse (A) parallel zu den längeren Seiten des Fahrzeugs zwischen einem vorderen Ausfahrende und einem hinteren Ausfahrende ermöglichen,
wobei die Kabine (1) ferner Gelenkmittel umfassen, ausgebildet, um die Rotation der Basis (10) um eine vertikale Achse (B) bezüglich des Bodens zu ermöglichen,
**dadurch gekennzeichnet, dass** die Kabine durch einen Boden, ein Dach und eine Mehrzahl von Seitenwänden begrenzt wird, und dass die Sitzanordnung/der Sitz (11) beweglich bezüglich der Basis entlang einer gekrümmten Bahn (10) zwischen einem oberen Hubende und einem unteren Hubende beweglich ist, und dass der Zwischenkörper (21) der Steueranordnung (3) relativ zu der Säule (20) gleitet.

2. Kabine (1) gemäß Anspruch 1, bei welcher das Gleiten entlang eines gradlinigen Wegs entlang einer Achse (D) zwischen einem oberen Hubende und einem unteren Hubende erfolgt, wobei der Zwischenkörper (21) in einer Mehrzahl stabiler Positionen zwischen dem oberen und dem unteren Hubende verfügbar ist.

3. Kabine (1) gemäß einem der vorhergehenden Ansprüche, bei welcher die Nabe (22) frei drehbar um eine Längsachse des Zwischenkörpers (21) gelagert ist.

4. Kabine (1) gemäß einem der vorhergehenden Ansprüche, bei welcher die Nabe (22) sich innerhalb eines vorgegebenen Winkelbereichs bezüglich einer Achse (E) senkrecht zu der Achse des Zwischenkörpers (21) neigen kann.

5. Kabine (1) gemäß einem der vorhergehenden Ansprüche, bei welcher die Nabe (22) Greifmittel umfasst, welche Greifmittel um eine bezüglich der Längsachse der Nabe (22) horizontale (G) und eine vertikale (F) Achse drehbar sind, um sich selbst jeweils in einer kompakten Position auf der Nabe (22) und einer geöffneten Position bezüglich der Nabe (22) zu positionieren.

6. Kabine (1) gemäß einem der vorhergehenden Ansprüche, ferner umfassend eine Konsole (4), welche Konsole (4) eine Basis (40) umfasst, die bezüglich des Bodens beweglich ist, und einen Falttisch (41), der aus der Basis (40) herausgezogen werden kann.

7. Kabine (1) gemäß einem der vorhergehenden Ansprüche, bei welcher die Bewegungen der Basis (10), der Sitzanordnung/des Sitzes (11) und des Zwischenkörpers (21) innerhalb der Kabine (1) manuell oder mit Hilfe elektrischer Betätigungsmittel erreicht werden können.

8. Kabine (1) gemäß einem der vorhergehenden Ansprüche, bei welcher einer der vorbestimmten Konfigurationen eine Konfiguration ist, die an den Fahrer angepasst ist, wenn dieser das Fahrzeug betritt, wobei
- die Steueranordnung (3) derart positioniert ist, dass der Zwischenkörper (21) an dem oberen Hubende angeordnet ist, die Nabe (22) nicht bezüglich der horizontalen Achse gedreht ist und die Greifmittel sich an dem unteren Hubende befinden,
- der Sitz (2) derart positioniert ist, dass die Sitzanordnung/der Sitz (11) an dem unteren Hubende positioniert sind, die Basis (10) an dem hinteren Ausfahrende positioniert ist und der Sitz (2) um 45 Grad bezüglich der Gleitachse (A) der Basis (10) gedreht ist und einer Tür der Kabine (1) des Fahrzeugs zugewandt ist.

9. Kabine (1) gemäß einem der vorhergehenden Ansprüche, bei welcher eine der vorbestimmten Konfigurationen eine Konfiguration ist, die an eine Stadtfahrt angepasst ist, wobei
- die Steueranordnung (3) derart positioniert ist, dass der Zwischenkörper (21) an dem oberen Hubende positioniert ist, die Nabe (22) nicht bezüglich der horizontalen Achse gedreht ist und die Greifmittel an dem unteren Hubende positioniert sind,
- der Sitz (2) derart positioniert ist, dass die Sitzanordnung/der Sitz (11) an dem unteren Hubende positioniert ist, die Basis (10) an ihrem vorderen Ausfahrende positioniert ist, und der Sitz (2) nicht bezüglich der Gleitachse (A) der Basis (10) gedreht ist.

10. Kabine (1) gemäß einem der vorhergehenden Ansprüche, bei welcher eine der vorbestimmten Konfigurationen eine Konfiguration für eine Autobahnfahrt ist, wobei
- die Steueranordnung (3) derart positioniert ist, dass der Zwischenkörper (21) in einer Zwischenposition positioniert ist, die Nabe (22) bezüglich der horizontalen Achse gedreht ist und die Greifmittel sich an dem unteren Hubende befinden,
- der Sitz (2) derart positioniert ist, dass die Sitzanordnung/der Sitz (11) an dem oberen Hubende positioniert ist, die Basis (10) an dem vorderen Ausfahrende positioniert ist, und der Sitz (2) nicht bezüglich der Gleitachse (A) der Basis (10) gedreht ist.

11. Kabine (1) gemäß einem der vorhergehenden Ansprüche, bei welcher eine der vorbestimmten Konfigurationen eine Konfiguration ist, die für automatisiertes Fahren vorgesehen ist, wobei
- die Steueranordnung (3) derart positioniert ist, dass der Zwischenkörper (21) an dem unteren Hubende positioniert ist, die Nabe (22) nicht bezüglich der horizontalen Achse gedreht ist, und die Greifmittel an dem oberen Hubende positioniert sind;
- der Sitz (2) derart positioniert ist, dass die Sitzanordnung/der Sitz (11) an dem oberen Hubende positioniert sind, die Basis (10) an dem vorderen Ausfahrende positioniert ist, und der Sitz (2) um 45 Grad bezüglich der Gleitachse (A) der Basis (10) gedreht ist und der einem Ausgang der Kabine (1) gegenüberliegenden Seite zugewandt ist.

12. Kabine (1) gemäß einem der vorhergehenden Ansprüche, bei welcher eine der vorbestimmten Konfigurationen eine Konfiguration ist, die an einen ruhenden Fahrer angepasst ist, gegebenenfalls mit Passagieren, wobei
- die Steueranordnung (3) derart positioniert ist, dass der Zwischenkörper (21) an dem unteren Hubende positioniert ist, die Nabe (22) nicht bezüglich der horizontalen Achse gedreht ist, und die Greifmittel an dem oberen Hubende positioniert sind,
- der Sitz (2) derart positioniert ist, dass die Sitzanordnung/der Sitz (11) an dem unteren Hubende positioniert sind, die Basis (10) an dem hinteren Ausfahrende positioniert ist, und der Sitz (2) um 90° bezüglich der Gleitachse (A) der Basis (10) gedreht ist und der einer Tür (5) der Kabine (1) gegenüberliegenden Seite zugewandt ist.

13. Kabine (1) gemäß einem der vorhergehenden Ansprüche, bei welcher eine der vorbestimmten Konfigurationen eine Konfiguration ist, die an einen ruhenden Fahrer angepasst ist, wobei
- die Steueranordnung (3) derart positioniert ist, dass der Zwischenkörper (21) an dem unteren Hubende positioniert ist, die Nabe (22) nicht bezüglich der horizontalen Achse gedreht ist und die Greifmittel an dem oberen Hubende positioniert sind,
- der Sitz (2) derart positioniert ist, dass die Sitzanordnung/der Sitz (11) an dem oberen Hubende positioniert ist, die Basis (10) an dem hinteren Ausfahrende positioniert ist, und der Sitz (2) um 135° im Uhrzeigersinn bezüglich der Gleitachse (A) der Basis (10) gedreht ist und der einer Tür (5) der Kabine (1) gegenüberliegenden Seite zugewandt ist.

## Revendications

1. Cabine (1) d'un véhicule industriel, ladite cabine (1) étant munie d'un ensemble de direction (3) et d'un ensemble d'assise (2),
ledit ensemble d'assise (2) comprenant une base (10) et un siège (11) supporté de manière mobile par rapport à ladite base (10),
ledit ensemble de direction (3) comprenant une colonne (20) fixée audit plancher, un corps intermédiaire (21) supporté d'une manière mobile par rapport à ladite colonne (20) et un moyeu (22) supporté de manière libre en rotation par rapport audit corps intermédiaire (21),
ledit ensemble de direction (3) et ledit ensemble d'assise (2) étant configurés pour modifier la position que chacun d'entre eux occupe, à l'intérieur de ladite cabine (1) et leurs positions relatives, afin d'être disposés dans une position sélectionnée parmi une pluralité de configurations prédéfinies de l'intérieur de ladite cabine (1),
ladite base (10) étant supportée d'une manière mobile par rapport au plancher de ladite cabine (1) via des moyens de guidage configurés pour permettre le mouvement de ladite base le long d'un axe (A) parallèle aux côtés plus longs dudit véhicule, entre une fin de course avant et une fin de course arrière
ladite cabine (1) comprenant en outre des moyens d'articulation configurés pour permettre la rotation de ladite base (10) autour d'un axe vertical (B), par rapport audit plancher ;
**caractérisé en ce que** la cabine est définie par un plancher, un toit et une pluralité de parois latérales, et **en ce que** l'ensemble d'assise/siège (11) est mobile par rapport à ladite base le long d'un trajet incurvé (C) entre une fin de course supérieure et une fin de course inférieure et
**en ce que** ledit corps intermédiaire (21) dudit ensemble de direction (3) coulisse par rapport à ladite colonne (20).

2. Cabine (1) selon la revendication 1, dans laquelle ledit coulissement se produit le long d'un trajet rectiligne le long d'un axe (D) entre une fin de course supérieure et une fin de course inférieure, ledit corps intermédiaire (21) étant disponible dans une pluralité de positions stables entre lesdites fins de course supérieure et inférieure.

3. Cabine (1) selon l'une quelconque des revendications précédentes, dans laquelle ledit moyeu (22) est supporté de manière libre en rotation autour d'un axe longitudinal dudit corps intermédiaire (21).

4. Cabine (1) selon l'une quelconque des revendications précédentes, dans laquelle ledit moyeu (22) peut s'incliner, dans une plage angulaire donnée, par rapport à un axe (E) perpendiculaire à l'axe dudit corps intermédiaire (21).

5. Cabine (1) selon l'une quelconque des revendications précédentes, dans laquelle ledit moyeu (22) comprend des moyens de préhension, lesdits moyens de préhension étant capables de tourner autour d'axes horizontal (G) et vertical (F) respectifs par rapport à un axe longitudinal dudit moyeu (22) pour se positionner eux-mêmes respectivement dans une position compacte sur ledit moyeu (22) et une position ouverte par rapport audit moyeu (22).

6. Cabine (1) selon l'une des revendications précédentes, comprenant en outre une console (4), ladite console (4) comprenant une base (40) mobile par rapport audit plancher et une table pliante (41) qui peut être extraite de ladite base (40).

7. Cabine (1) selon l'une des revendications précédentes, dans laquelle les mouvements de ladite base (10), dudit ensemble d'assise/siège (11) et dudit corps intermédiaire (21) logés dans ladite cabine (1) peuvent être réalisés manuellement ou au moyen d'actionneurs électriques.

8. Cabine (1) selon l'une des revendications précédentes, dans laquelle l'une desdites configurations prédéfinies est une configuration adaptée au conducteur lorsqu'il rentre dans le véhicule, dans laquelle :
- ledit ensemble de direction (3) est positionné de sorte que ledit corps intermédiaire (21) est positionné dans ladite fin de course supérieure, ledit moyeu (22) n'est pas tourné par rapport audit axe horizontal et lesdits moyens de préhension sont positionnés dans ladite fin de course inférieure,
- ledit siège (2) est positionné de sorte que ledit ensemble d'assise/siège (11) est positionné au niveau de ladite fin de course inférieure, ladite base (10) est positionnée au niveau de ladite fin de course arrière, et ledit siège (2) est tourné de 45 degrés, par rapport à l'axe de coulissement (A) de ladite base (10), en faisant face à une porte de ladite cabine (1) du véhicule.

9. Cabine (1) selon l'une des revendications précédentes dans laquelle l'une desdites configurations prédéfinies est une configuration adaptée à une conduite en ville, dans laquelle :
- ledit ensemble de direction (3) est positionné de sorte que ledit corps intermédiaire (21) est positionné dans ladite fin de course supérieure, ledit moyeu (22) n'est pas tourné par rapport audit axe horizontal et lesdits moyens de préhension sont positionnés dans ladite fin de course inférieure,
- ledit siège (2) est positionné de sorte que ledit ensemble d'assise/siège (11) est positionné au niveau de ladite fin de course inférieure, ladite base (10) est positionnée au niveau de ladite fin de course avant, et ledit siège (2) n'est pas tourné par rapport à l'axe de coulissement (A) de ladite base (10).

10. Cabine (1) selon l'une des revendications précédentes, dans laquelle l'une desdites configurations prédéfinies est une configuration adaptée à une conduite sur autoroute, dans laquelle :
- ledit ensemble de direction (3) est positionné de sorte que ledit corps intermédiaire (21) est positionné dans une position intermédiaire, ledit moyeu (22) est tourné par rapport audit axe horizontal et lesdits moyens de préhension sont positionnés dans ladite fin de course inférieure,
- ledit siège (2) est positionné de sorte que ledit ensemble d'assise/siège (11) est positionné au niveau de ladite fin de course supérieure, ladite base (10) est positionnée au niveau de ladite fin de course avant, et ledit siège (2) n'est pas tourné par rapport à l'axe de coulissement (A) de ladite base (10).

11. Cabine (1) selon l'une des revendications précédentes, dans laquelle l'une desdites configurations prédéfinies est une configuration adaptée à une conduite automatique, dans laquelle :
- ledit ensemble de direction (3) est positionné de sorte que ledit corps intermédiaire (21) est positionné dans ladite fin de course inférieure, ledit moyeu (22) n'est pas tourné par rapport audit axe horizontal et lesdits moyens de préhension sont positionnés dans ladite fin de course supérieure ;
- ledit siège (2) est positionné de sorte que ledit ensemble d'assise/siège (11) est positionné au niveau de ladite fin de course supérieure, ladite base (10) est positionnée au niveau de ladite fin de course avant, et ledit siège (2) est tourné de 45° par rapport à l'axe de coulissement (A) de ladite base (10), en faisant face au côté opposé par rapport à une sortie de ladite cabine (1).

12. Cabine (1) selon l'une des revendications précédentes, dans laquelle l'une desdites configurations prédéfinies est une configuration adaptée au conducteur lorsqu'il est à l'arrêt, potentiellement avec des passagers, dans laquelle :
- ledit ensemble de direction (3) est positionné de sorte que ledit corps intermédiaire (21) est positionné dans ladite fin de course inférieure, ledit moyeu (22) n'est pas tourné par rapport audit axe horizontal et lesdits moyens de préhension sont positionnés dans ladite fin de course supérieure,
- ledit siège (2) est positionné de sorte que ledit ensemble d'assise/siège (11) est positionné au niveau de ladite fin de course inférieure, ladite base (10) est positionnée au niveau de ladite fin de course arrière, et ledit siège (2) est tourné de 90° par rapport à l'axe de coulissement (A) de ladite base (10), en faisant face au côté opposé par rapport à une porte (5) de ladite cabine (1).

13. Cabine (1) selon l'une des revendications précédentes, dans laquelle l'une desdites configurations prédéfinies est une configuration adaptée au conducteur lorsqu'il est à l'arrêt, dans laquelle :
- ledit ensemble de direction (3) est positionné de sorte que ledit corps intermédiaire (21) est positionné dans ladite fin de course inférieure, ledit moyeu (22) n'est pas tourné par rapport audit axe horizontal et lesdits moyens de préhension sont positionnés dans ladite fin de course supérieure,
- ledit siège (2) est positionné de sorte que ledit ensemble d'assise/siège (11) est positionné au niveau de ladite fin de course supérieure, ladite base (10) est positionnée au niveau de ladite fin de course arrière, et ledit siège (2) est tourné de 135° dans le sens des aiguilles d'une montre par rapport à l'axe de coulissement (A) de ladite base (10), en faisant face au côté opposé par rapport à une porte (5) de ladite cabine (1).
